# EUROPÄISCHE PATENTSCHRIFT

(11) **EP 0 825 233 B1**
(45) Veröffentlichungstag und Bekanntmachung des Hinweises auf die Patenterteilung: **31.10.2001**
(21) Anmeldenummer: 97113943.1
(22) Anmeldetag: 13.08.1997
(51) Int. Cl.: C09B 67/36, C09D 11/00, C09D 7/12, C09D 11/16

(54) **Wässrige Farbstoffpräparationen**
Aqueous dyestuff preparations
Préparations de colorants aqueuses

(30) Priorität: 20.08.1996 DE 19633332
(43) Veröffentlichungstag der Anmeldung: 25.02.1998
(73) Patentinhaber: BASF AKTIENGESELLSCHAFT, 67056 Ludwigshafen (DE)
(72) Erfinder: Hoffmann, Dietrich, 67127 Rödersheim-Gronau (DE); Schlösser, Ulrike, Dr., 67071 Ludwigshafen (DE); Czech, Erwin, Dr., 68647 Biblis (DE); Kurtz, Walter, Dr., 67098 Bad Dürkheim (DE); Beck, Karin Heidrun, Dr., 67067 Ludwigshafen (DE); Campbell, Doug R., West Sandlake NY 12196 (US)
(74) Vertreter: Riedl, Peter, Dr.

(56) Entgegenhaltungen:
- DE-A- 3 445 225
- DE-A- 4 227 591

## Beschreibung

Die vorliegende Erfindung betrifft neue wäßrige Farbstoffpräparationen, enthaltend, jeweils bezogen auf das Gewicht der Praparation, 0,1 bis 15 Gew.-% Farbstoff, wobei 90 bis 100 Gew.-% der Farbstoffmenge aus dem Farbstoff der Formel I 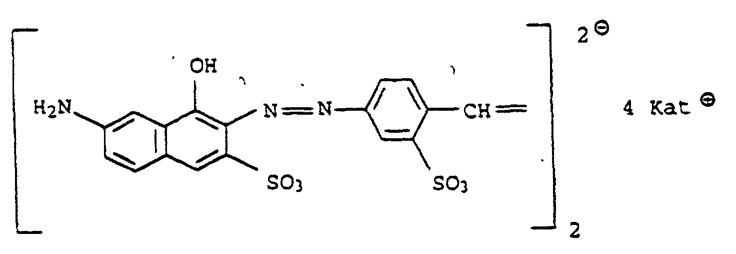 besteht, in der Kat^{⊕} das Äquivalent eines Metall- oder Ammoniumions bedeutet, 1 bis 40 Gew.-% Ruß und 0,1 bis 15 Gew.-% Polyethylenglykol oder ethoxyliertes und/oder propoxyliertes Ethylendiamin, die Verwendung dieser wäßrigen Farbstoffpräparationen zur Herstellung von Tinten für das Ink-Jet-Verfahren oder Schreibtinten oder zur Herstellung von wäßrig-alkoholischen Lackoder Druckfarben sowie Tinten und wäßrig-alkoholische Lack- oder Druckfarben, enthaltend jeweils die obengenannten wäßrigen Farbstoffpräparationen.

In der US-A-5 431 723 ist die Herstellung der Farbstoffe der Formel I sowie ihre Anwendung im Ink-Jet-Verfahren beschrieben.

Das Ink-Jet-Verfahren ist an sich bekannt. Dabei werden Tröpfchen einer Schreibflüssigkeit (Tinte) aus einer oder mehreren kleinen Düsen gezielt auf einen Träger, z.B. auf Papier, Holz, Textilien, Kunststoff oder Metall, geschossen. Durch elektronische Aus-Steuerung werden die einzelnen Tröpfchen zu Schriftzeichen oder graphischen Mustern zusammengefaßt.

Es hat sich gezeigt, daß die in der US-A- 5 431 723 beschriebenen Tinten immer noch anwendungstechnische Nachteile, insbesondere eine schlechte Wasserbeständigkeit und Lichtechtheit aufweisen.

Aufgabe der vorliegenden Erfindung war es, flüssige, wäßrige Farbstoffpräparationen bereitzustellen, die sich vorteilhaft zur Herstellung von Tinten für das Ink-Jet-Verfahren, Schreibtinten oder von Druckfarben eignen und dabei über günstige anwendungstechnische Eigenschaften, insbesondere über verbesserte Wasserbeständigkeit und Lichtechtheit verfügen.

Demgemäß wurden die eingangs näher bezeichneten Farbstoffpräparationen gefunden.

Wie oben bereits ausgeführt, besteht der Farbstoff im wesentlichen, d.h. zu 90 bis 100 Gew.-%, vorzugsweise 95 bis 100 Gew.-%, jeweils bezogen auf die Farbstoffmenge, aus dem Farbstoff der Formel I.

Zusätzlich können noch 0 bis 10 Gew.-%, vorzugsweise 0 bis 5 Gew.-%, jeweils bezogen auf die Farbstoffmenge, eines oder mehrerer Nuancierfarbstoffe, z.B. C.I. Acid Yellow 23 (19 140), C.I. Acid Blue 9 (42 090), C.I. Direct Red 254, C.I. Direct Blue 86 (74 180), C.I. Reactive Red 24, C.I. Reactive Blue 49, C.I. Reactive Red 72 oder die Farbsäure des Umsetzungsproduktes von tetrazotierter Flavonsäure mit 1-Amino-8-hydroxynaphthalin-3,6-disulfonsäure oder 2-Hydroxy-3-methylbenzoesäure jeweils im Molverhältnis 1:2, vorhanden sein.

Kat^{⊕} in Formel I ist das Äquivalent eines Kations und leitet sich von Metall- oder Ammoniumionen ab. Metallionen sind insbesondere die Lithium-, Natrium-, Kalium-, Magnesium- oder Calciumionen. Ammoniumionen sind entweder unsubstituierte oder substituierte Ammoniumkationen. Substituierte Ammoniumkationen sind z.B. Monoalkyl-, Dialkyl-, Trialkyl-, Tetraalkyl- oder Benzyltrialkylammoniumkationen oder solche Kationen, die sich von stickstoffhaltigen fünf- oder sechsgliedrigen gesättigten Heterocyclen ableiten, wie Pyrrolidinium-, Piperidinium-, Morpholinium- oder Piperaziniumkationen oder deren N-monoalkyl- oder N,N-dialkylsubstituierte Produkte. Unter Alkyl ist dabei im allgemeinen geradkettiges oder verzweigtes C₁-C₂₀-Alkyl zu verstehen, das ein- oder zweifach durch Hydroxy substituiert und/oder durch 1 bis 3, vorzugsweise 1 oder 2 Sauerstoffatome in Etherfunktion unterbrochen sein kann.

Insbesondere sind Triethanolammonium-, Lithium-, Natrium- oder Kaliumionen zu nennen, wobei Lithium- oder Natriumionen und insbesondere Triethanolammoniumionen besonders hervorzuheben sind.

Die Farbstoffpräparationen enthalten 0,1 bis 15 Gew.-%, vorzugsweise 0,1 bis 8 Gew.-% und insbesondere 0,8 bis 6 Gew.-%, jeweils bezogen auf das Gewicht der Präparation, Farbstoff.

Ein weiterer Bestandteil der erfindungsgemäßen Farbstoffpräparationen ist Ruß. Vorteilhaft ist die Verwendung von Ruß in Pigmentqualität. Die Teilchengröße der Rußpartikel beträgt in der Regel 13 bis 100 nm. Solche Produkte sind handelsüblich und z.B. als C.I. Pigment Black 7 bekannt. Handelsübliche Produkte sind im einzelnen beispielsweise Printex 95, Printex 90, Printex 85, Printex 80, Printex 75, Printex 45, Printex 40, Printex P, Printex 60, Printex 300, Printex 30, Printex 35, Printex 25, Printex 200, Printex A, Printex G, Printex L6, Printex L, Spezialschwarz 4, Spezialschwarz 5, Spezialschwarz 6, Spezialschwarz 100 oder FW 200 (jeweils Firma Degussa), #2600, #2300, #990, #980, #960, #950, #900, #850, #650, #95, MCF-88, #55, #52, #47, #45, #45L, #44, #40, #33 oder #32 (Firma Mitsubishi Chemicals), Raven 850, Raven 450, Raven 460 oder Raven 890 (Firma Columbian Carbon) oder Regal 330R, Regal 415R, Regal 250R, Regal 950R, Monarch 800, Monarch 880, Monarch 900, Monarch 460, Monarch 280 oder Monarch 120 (Firma Cabot).

Bevorzugt ist die Anwendung von leichtdispergierbaren feinstteiligen Rußen, z. B. von Printex A, Spezialschwarz 4, Spezialschwarz 5, Spezialschwarz 6, FW 200, #2600, #850 oder Monarch 900.

In besonders bevorzugten Farbstoffpräparationen ist Spezialschwarz 4, Spezialschwarz 5, Spezialschwarz 6 oder FW 200 enthalten.

Die Farbstoffpräparationen enthalten 1 bis 40 Gew.-%, vorzugsweise 5 bis 40 Gew.-% und insbesondere 5 bis 25 Gew.-%, jeweils bezogen auf das Gewicht der Präparation, Ruß.

Ein weiterer Bestandteil der erfindungsgemäßen Farbstoffpräparationen ist Polyethylenglykol. Neben Polyethylenglykol ist auch ethoxyliertes und/oder propoxyliertes Ethylendiamin verwendbar.

Bevorzugt sind Polyethylenglykole oder ethoxylierte und/oder propoxylierte Ethylendiamine mit einem mittleren Molekulargewicht (Massenmittel) von 300 bis 9000, vorzugsweise 1000 bis 6000 und insbesondere 2000 bis 4000.

Die Farbstoffpräparationen enthalten 0,1 bis 15 Gew.-%, vorzugsweise 0,1 bis 6 Gew.-% und insbesondere 0,8 bis 5 Gew.-%, jeweils bezogen auf das Gewicht der Präparation, Polyethylen oder ethoxyliertes und/oder propoxyliertes Ethylendiamin.

Weitere Bestandteile der erfindungsgemäßen Farbstoffpräparationen können z.B. Polypropylenglykole mit einem mittleren Molekulargewicht (Massenmittel) von 400 bis 1000, vorzugsweise 500 bis 700 und insbesondere ca. 600, sein. Wenn die erfindungsgemäßen Farbstoffpräparationen Propylenglykol enthalten, so liegt der Anteil an Propylenglykol in der Regel bei 0,1 bis 15 Gew.-%, vorzugsweise 0,1 bis 6 Gew.-%, jeweils bezogen auf das Gewicht der Präparation.

Die erfindungsgemäßen Farbstoffpräparationen sollen im wesentlichen frei sein von Fremdsalzen. Dies bedeutet im erfindungsgemäßen Sinn, daß sie gegebenenfalls noch untergeordnete Mengen, beispielsweise 0 bis 10 Gew.-%, vorzugsweise 0 bis 5 Gew.-% und insbesondere ca. 0 Gew.-%, jeweils bezogen auf das Gewicht der Präparation, an Fremdsalzen enthalten.

Unter Fremdsalzen sind in diesem Zusammenhang in der Regel solche Salze zu verstehen, die bei der Synthese (Azokupplung) der Farbstoffe der Formel I anfallen können, z.B. Natrium- oder Kaliumchlorid oder Natrium- oder Kaliumsulfat.

Der restliche, sich auf 100 Gew.-% ergänzende Anteil in der erfindungsgemäßen Farbstoffpräparation ist in der Regel Wasser.

Besonders gute Ergebnisse erzielt man mit wäßrigen Farbstoffpräparationen, in denen das Gewichtsverhältnis Ruß : Farbstoff 6 : 1 oder größer ist.

Eine besonders vorteilhafte wäßrige Farbstoffpräparation enthält, jeweils bezogen auf das Gewicht der Präparation, 1 bis 5 Gew.-% Farbstoff, 5 bis 25 Gew.-% Ruß und 1 bis 5 Gew.-% Polyethylenglykol.

Daneben sind auch solche wäßrigen Farbstoffpräparationen hervorzuheben, in denen die einzelnen Parameter aus einer Kombination der oben aufgeführten bevorzugten Parameter ausgewählt sind.

Die erfindungsgemäßen wäßrigen Farbstoffpräparationen eignen sich in vorteilhafter Weise zur Herstellung von Tinten für das Ink-Jet-Verfahren oder Schreibtinten oder von wäßrig-alkoholischen Lack- oder Druckfarben.

Solche Tinten werden erhalten, wenn man die erfindungsgemäßen wäßrigen Farbstoffpräparationen mit Wasser, oder mit Mischungen aus Wasser und von mit Wasser mischbaren organischen Lösungsmitteln, verdünnt.

Geeignete mit Wasser mischbaren organischen Lösungsmittel sind z.B. C₁-C₄-Alkanole, wie Methanol, Ethanol, Propanol, Isopropanol, Butanol, Isobutanol, sec-Butanol oder tert-Butanol, Carbonsäureamide, wie N,N-Dimethylformamid oder N,N-Dimethylacetamid, Lactame, wie ε-Caprolactam, Pyrrolidin-2-on oder N-Methylpyrrolidin-2-on, Harnstoff, cyclische Harnstoffe, wie 1,3-Dimethylimidazolidin-2-on oder 1,3-Dimethylhexahydropyrimid-2-on, Ketone oder Ketoalkohole, wie Aceton, Methylethylketon oder 2-Methyl-2-hydroxypentan-4-on, Ether, wie Tetrahydrofuran oder Dioxan, Mono-, Oligo- oder Polyalkylenglykole oder -thioglykole, die C₂-C₆-Alkyleneinheiten aufweisen, wie Ethylenglykol, 1,2- oder 1,3-Propylenglykol, 1,2- oder 1,4-Butylenglykol, Hexan-1,6-diol, Diethylenglykol, Triethylenglykol, Dipropylenglykol, Thiodiglykol, Polyethylenglykol oder Polypropylenglykol, andere Polyole, wie Glycerin oder Hexan-1,2,6-triol, C₁-C₄-Alkylether von mehrwertigen Alkoholen, wie Ethylenglykolmonomethyl- oder -monoethylether, Diethylenglykolmonomethyl- oder -monoethylether oder Triethylenglykolmonomethyl- oder -monoethylether, γ-Butyrolacton oder Dimethylsulfoxid.

Mit Wasser mischbare organische Lösungsmittel, die bevorzugt sind, sind beispielsweise Pyrrolidin-2-on, N-Methylpyrrolidin-2-on, Mono-, Di- oder Trialkylenglykole, die C₂-C₆-Alkyleneinheiten aufweisen, insbesondere Mono-, Di- oder Triethylenglykol oder Dipropylenglykol, oder Dimethylsulfoxid. Ganz besonders hervorzuheben sind N-Methylpyrrolidin-2-on, Diethylenglykol oder Dimethylsulfoxid.

Die wäßrig-alkoholischen Lack- oder Druckfarben werden erhalten, wenn man die erfindungsgemäße Farbstoffpräparation mit einem C₁-C₄-Alkanol, gegebenenfalls unter weiterem Zusatz von Wasser, verdünnt und gegebenenfalls noch mit handelsüblichen Bindemitteln versetzt.

Die erfindungsgemäßen Tinten oder Lack- oder Druckfarben enthalten in der Regel 2 bis 50 Gew.-%, vorzugsweise 15 bis 30 Gew.-%, jeweils bezogen auf das Gewicht der Tinte, Lack- oder Druckfarbe an erfindungsgemäßer Farbstoffpräparation.

Weiterhin enthalten die erfindungsgemäßen Tinten oder Lack- oder Druckfarben in der Regel 75 bis 98 Gew.-%, vorzugsweise 80 bis 94,9 Gew.-% und insbesondere 86 bis 93 Gew.-%, jeweils bezogen auf das Gewicht der Tinte Lack- oder Druckfarbe, Wasser.

Die erfindungsgemäßen Tinten enthalten 0 bis 30 Gew.-%, vorzugsweise 5 bis 15 Gew.-%, jeweils bezogen auf das Gewicht der Tinte, eines oder mehrerer mit Wasser mischbarer organischer Lösungsmittel.

Erfindungsgemäße Lack- oder Druckfarben enthalten in der Regel 1 bis 70 Gew.-%, vorzugsweise 10 bis 30 Gew.-%, jeweils bezogen auf das Gewicht der Lack- oder Druckfarbe, C₁-C₄-Alkanol.

Weitere Bestandteile der erfindungsgemäßen Tinten oder Lack- oder Druckfarben können z.B. Hilfsmittel, wie anionische, kationische oder nichtionische Tenside, Leitsalze, Fungizide, Bakterizide, Korrosionsinhibitoren oder Parfümöle sein. Der Anteil dieser Komponenten liegt in der Regel bei 0 bis 10 Gew.-%, vorzugsweise 0 bis 5 Gew.-%, jeweils bezogen auf das Gewicht der Tinte oder Druckfarbe.

Die so erfindungsgemäßen Tinten oder Lack- oder Druckfarben zeichnen sich bei ihrer Anwendung durch hohe Wasserbeständigkeit und Lichtechtheit aus.

Die erfindungsgemäßen Farbstoffpräparationen eignen sich ebenfalls als Markierflüssigkeit in Schreibgeräten, als wäßrige Flüssigtoner oder als Basis für Beschichtungsmassen, z.B. Holzbeizen, Farbbandfarben, Stempelfarben oder Kugelschreiberpasten. Sie sind auch geeignet, Papier in der Masse zu färben.

Die erfindungsgemäßen Präparationen und ihre Anwendungen werden in den folgenden Beispielen näher erläutert. Die dort angegebenen Teile sind Gewichtsteile.

### Beispiel 1

a) 100 g eines Gasrußes mit Teilchengrößen von 25 nm, 10 g des Triethanolaminsalzes des Farbstoffs der Formel I und 380 ml Wasser wurden in einem 1 1-Metall-Rührbecher ca. 5 min gemischt und anschließend in eine Dispergierapparatur (Dispermat SL 603) übergeführt. Diese war mit 100 ml Glaskugeln (Durchmesser 1 mm) bestückt. Die Mühlenleistung wurde auf 70 %, die Pumpenleistung auf 30 % eingestellt. Unter diesen Bedingungen wurde die Mischung 10 min lang behandelt.
   Danach werden 10 g eines Polyethylenglykols mit einem mittleren Molekulargewicht von 4000 zugesetzt und die Mischung 4 h bei den oben angegebenen Bedingungen in der Dispergierapparatur feinverteilt. Die Suspension wurde dann über ein Sieb mit einer Maschenweite von 46 µm abgelassen. Die Konzentration des Farbstoffs der Formel I in der Präparation beträgt 2 Gew.-%, die des Rußes 20 %.
b) Zur Herstellung einer Ink-Jet-Tinte wurden 25 Teile der unter a) beschriebenen Präparation, 10 Teile N-Methylpyrrolidon (NMP) und 65 Teile Wasser intensiv gemischt. Der pH-Wert wurde mittels Triethanolamin auf 7,5 gestellt, die Tintenformulierung danach über eine 1 µm-Teflon-Filterkartusche abgesaugt und dann unter vermindertem Druck entgast. Die gebrauchsfähige Tinte wird in eine handelsübliche Ink-Jet-Kartusche (HP 51626 A der Firma Hewlett-Packard) übergeführt und danach in einem handelsüblichen Ink-Jet-Drucker (Desk Jet 500 C der Firma Hewlett-Packard) getestet. Gedruckt wurde auf handelsübliches Xerox 4024-Normalpapier.
   Mit den erhaltenen Drucken wurden optische Dichte, Wasserechtheit, Lichtechtheit, Markerechtheit und Abriebechtheit geprüft. Das Erscheinungsbild des Druckes wurde visuell beurteilt.

Zur Bestimmung der optischen Dichte (OD) wurde ein Meßgerät der Firma Gretag (Typ 169) verwendet, die Bestimmung erfolgte an gedruckten Vollflächen auf den beiden Papiersorten.

Zur Bestimmung der Wasserechtheit wurde ein mit einer Vollfläche bedrucktes Normalpapier für 5 min in ein mit Wasser gefülltes Becherglas getaucht, wobei die Flüssigkeit mit einer Umdrehung von 100 upm gerührt wurde. Danach wurde das Papier aus dem Wasser entfernt, getrocknet und die OD erneut bestimmt. Die Differenz aus der vor der Behandlung gemessenen OD und der nach der Wasserbehandlung bestimmten OD ist ein Maß für die Wasserechtheit. Je kleiner ΔOD, desto besser die Wasserechtheit.

Die Lichtechtheit wurde geprüft durch 48-stündige Belichtung einer schwarzen Vollfläche mit einer Xenonlampe (100 W).

Die Markerechtheit wurde geprüft durch das Überstreichen einer gedruckten Schriftzeite mit einem Markerstift. Je weniger die Schrift verschmiert, desto besser die Markerechtheit.

Der Kogationtest wurde durchgeführt, indem 10 mal 1 Mio. Impulse zur Ausstoßung von Ink-Jet-Tröpfchen auf alle Düsen einer handelsüblichen Kartusche (51 626 der Firma Hewlett-Packard) gegeben werden. Wenn die Masse der ausgestoßenen Tinte nach jeder Messung konstant ist, ist der Kogationtest in Ordnung, ansonsten zeigt dieser Stabilitätstest, daß sich das Druckverhalten der Tinte verändert.

Das Erscheinungsbild der Drucke wurde visuell beurteilt nach den Kriterien, Gleichmäßigkeit einer Vollfläche, Schärfe der Linien, Farbeindruck und das Durchschlagen der Farbe durch das Papier.

### Beispiel 2 (Vergleich)

a) 100 g des in Beispiel 1 benutzten Gasrußes, 390 ml Wasser und 10 g eines Polyethylenglykols mit einem mittleren Molekulargewicht von 4000 wurden in einem 1 l-Metall-Rührbecher ca. 5 min gemischt. Dabei wurde eine hochviskose Masse erhalten.
b) 25 Teile dieser Masse wurden mit 10 Teilen NMP und 65 Teilen Wasser verdünnt und diese Tintenformulierung mit einem Rußgehalt von 5 % in der in Beispiel 1 beschriebenen Dispergierapparatur unter den dort beschriebenen Bedingungen behandelt. Die Tinte wurde dann über ein Sieb mit einer Maschenweite von 46 µm abgelassen. In dieser Vergleichstinte ist kein Farbstoff der Formel I enthalten. Die Konzentration des Rußes beträgt, wie in Beispiel 1, 5 Gew.-%. Die Tinte ist völlig instabil und flockt aus. Ein Druck nach dem Ink-Jet-Verfahren ist nicht möglich.

### Beispiel 3 (Vergleich)

a) 10 g des in Beispiel 1 verwendeten Farbstoffs wurden in 490 g Wasser gelöst und der pH-Wert mittels Triethanolamin auf 7,5 gestellt.
b) 25 Teile dieser Präparation wurden analog Beispiel 1 mit 10 Teilen NMP und 65 Teilen Wasser verdünnt. Die Lösung wurde analog Beispiel 1 in eine Ink-Jet-Kartusche appliziert und geprüft.

Die Testergebnisse aus den Beispielen 1 bis 3 sind in der folgenden Tabelle 1 aufgeführt.

**Tabelle 1**

| Drucke mit dem Ink-Jet Drucker der Marke Desk Jet 500 C (Hewlett-Packard) | Beispiel 1 | Beispiel 2 | Beispiel 3 |
|---|---|---|---|
| pH-Wert | 7,5 | 7,5 | 7,5 |
| Optische Dichte OD | 2,78 | - | 0,9 |
| Wasserechtheit ΔOD | 0,05 | - | 0,04 |
| Lichtechtheit ΔOD | 0,1 | - | 0,26 |
| Markerechtheit | gut | - | nicht akzeptabel |
| Kogationtest | gut | - | gut |
| Druckbild | tiefschwarz (gut) | - | blaß,blauviolett (nicht akzeptabel) |

### Beispiel 4

a) 100 g eines Furnacerußes mit einer Teilchengröße von 25 nm, 10 g einer Disazofarbstoffmischung, erhalten durch Tetrazotierung von Flavonsäure und Kupplung mit einem Gemisch aus 1-Amino-8-hydroxynaphthalin-3,6-disulfonsäure, 2-Amino-8-hydroxynaphthalin-6-sulfonsäure und 2-Hydroxy-3-methylbenzoesäure, und 380 g Wasser wurden in einem 1 1-Metall-Rührbecher ca. 5 min gemischt, anschließend in die in Beispiel 1 beschriebene Dispergierapparatur übergeführt und unter den dort beschriebenen Bedingungen 10 min lang behandelt. Danach wurden 10 g eines Polyethylenglykols mit einem mittleren Molekulargewicht von 4000 zugesetzt und die Mischung 4 h lang bei den oben angegebenen Bedingungen fein verteilt. Die Suspension wurde dann über ein Sieb mit einer Maschenweite von 46 µm abgelassen. Die Konzentration an Farbstoffmischung betrug 2 %.
b) Zur Herstellung einer Ink Jet-Tinte wurden 25 Teile der oben beschriebenen Präparation, 10 Teile NMP und 65 Teile Wasser intensiv gemischt. Der pH-Wert wurde mittels Triethanolamin auf 7,5 gestellt, die Tintenformulierung danach über eine 1 um-Teflon-Filterkartusche abgesaugt und danach unter vermindertem Druck entgast. Die gebrauchsfähige Tinte wurde dann analog Beispiel 1 in eine Ink-Jet-Kartusche übergeführt und getestet.

### Beispiel 5

a) 10 g des in Beispiel 1 verwendeten Farbstoffs (aber als Lithiumsalz) wurden in 56 g einer 36 gew.-%igen wässrigen Rußpräparation eingerührt, die 8 Gew.-% eines ethoxylierten und anschließend propoxylierten Ethylendiamins mit einem mittleren Molgewicht von 7500 enthielt. Danach wurden 34 ml Wasser zugegeben und anschließend 4 h in der in Beispiel 1 beschriebenen Dispergierapparatur behandelt.
b) Zur Herstellung einer Ink-Jet-Tinte wurden 25 Teile der oben beschriebenen Präparation, 10 Teile NMP und 65 Teile Wasser intensiv gemischt. Der pH-Wert wurde mittels 1 gew.-%iger wäßriger Lithiumhydroxidlösung auf 7,5 gestellt, die Tintenformulierung danach über eine 1 µm-Teflon-Pilterkartusche abgesaugt und danach unter vermindertem Druck entgast. Die gebrauchsfähige Tinte wurde analog Beispiel 1 getestet.

### Beispiel 6

a) 10 g des in Beispiel 1 verwendeten Farbstoffs (aber als Lithiumsalz) und 10 g des in Beispiel 1 verwendeten Polyethylenglykols wurden in 56 g einer 36 %igen wässrigen Rußpräparation eingerührt, die 8 Gew.-% eines ethoxylierten und anschließend propoxylierten Ethylendiamins mit einem mittleren Molgewicht von 7500 enthielt. Danach wurden 324 ml Wasser zugegeben und anschließend 4 h in der in Beispiel 1 beschriebenen Dispergierapparatur behandelt.
b) Zur Herstellung einer Ink-Jet-Tinte wurden 25 Teile der oben beschriebenen Präparation, 10 Teile NMP und 65 Teile Wasser intensiv gemischt. Der pH-Wert wurde mittels 1 gew.-%iger wässriger Lithiumhydroxidlösung auf 7,5 gestellt, die Tintenformulierung danach über eine 1 µm-Teflon-Filterkartusche abgesaugt und danach unter vermindertem Druck entgast. Die gebrauchsfähige Tinte wurde analog Beispiel 1 getestet.

Die Testergebnisse aus den Beispielen 4 bis 6 sind in der folgenden Tabelle 2 aufgeführt.

**Tabelle 2**

| Drucke mit dem Ink-Jet-Drucker der Marke Desk Jet 500C (Hewlett-Packard) | Beispiel 4 | Beispiel 5 | Beispiel 6 |
|---|---|---|---|
| Optische Dichte OD | 2,67 | 1,2 | 1,13 |
| Wasserechtheit ΔOD | 0,05 | 0,04 | 0,01 |
| Lichtechtheit ΔOD | 0,1 | 0,0,06 | 0,03 |
| Markerechtheit | gut | mangelhaft | nicht akzeptabel |
| Kogationtest | gut | nicht akzeptabel | nicht akzeptabel |
| Druckbild | tiefschwarz (gut) | fleckig, braun, schlägt durch (nicht akzeptabel) | fleckig, braun, schlägt durch (nicht akzeptabel) |

## Patentansprüche

1. Wäßrige Farbstoffpräparationen, enthaltend, jeweils bezogen auf das Gewicht der Präparation, 0,1 bis 15 Gew.-% Farbstoff, wobei 90 bis 100 Gew.-% der Farbstoffmenge aus dem Farbstoff der Formel I 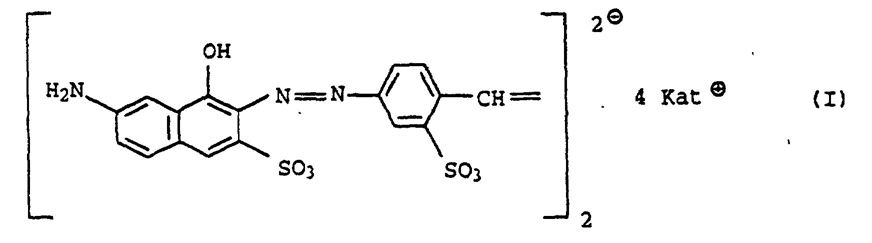 besteht, in der Kat^{⊕} das Äquivalent eines Metall- oder Ammoniumions bedeutet, 1 bis 40 Gew.-% Ruß und 0,1 bis 15 Gew.-% Polyethylenglykol oder ethoxyliertes und/oder propoxyliertes Ethylendiamin.

2. Wäßrige Farbstoffpräparationen nach Anspruch 1, enthaltend Polyethylenglykol oder ethoxyliertes und/oder propoxyliertes Ethylendiamin mit einem mittleren Molekulargewicht von 300 bis 9000.

3. Wäßrige Farbstoffpräparationen nach Anspruch 1, enthaltend 0,1 bis 8 Gew.-%, jeweils bezogen auf das Gewicht der Präparation, Farbstoff.

4. Wäßrige Farbstoffpräparationen nach Anspruch 1, enthaltend 5 bis 40 Gew.-%, jeweils bezogen auf das Gewicht der Präparation, Ruß.

5. Wäßrige Farbstoffpräparationen nach Anspruch 1, enthaltend 0,1 bis 6 Gew.-%, jeweils bezogen auf das Gewicht der Präparation, Polyethylenglykol oder ethoxyliertes und/oder propoxyliertes Ethylendiamin.

6. Verwendung der wäßrigen Farbstoffpräparationen gemäß Anspruch 1 zur Herstellung von Tinten für das Ink-Jet-Verfahren oder von Schreibtinten.

7. Tinten, enthaltend eine wäßrige Farbstoffpräparation gemäß Anspruch 1, Wasser oder Mischungen aus Wasser und von mit Wasser mischbaren organischen Lösungsmitteln.

8. Verwendung der wäßrigen Farbstoffpräparationen gemäß Anspruch 1 zur Herstellung von wässrig-alkoholischen Lack- oder Druckfarben.

9. Wäßrig-alkoholische Lack- oder Druckfarben, enthaltend eine wäßrige Farbstoffpräparation gemäß Anspruch 1, Wasser und mindestens ein C₁-C₄-Alkanol.

## Claims

1. An aqueous dye preparation comprising, based on the weight of the preparation, from 0.1 to 15% by weight of a dye quantity comprising from 90 to 100% by weight of the dye of the formula I 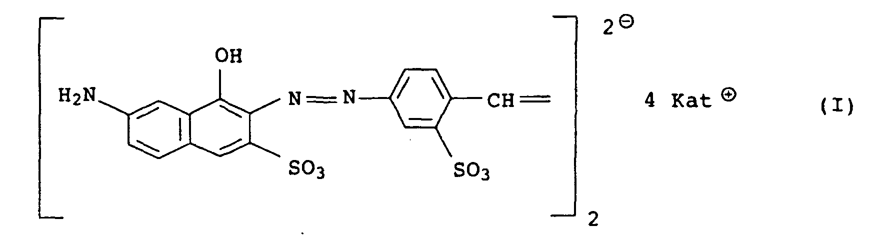 where Kat^{⊕} is the equivalent of a metal or ammonium ion, from 1 to 40% by weight of carbon black and from 0.1 to 15% by weight of polyethylene glycol or ethoxylated and/or propoxylated ethylenediamine.

2. An aqueous dye preparation as claimed in claim 1, comprising polyethylene glycol or ethoxylated and/or propoxylated ethylenediamine having an average molecular weight of from 300 to 9000.

3. An aqueous dye preparation as claimed in claim 1, comprising from 0.1 to 8% by weight, based on the weight of the preparation, of dye.

4. An aqueous dye preparation as claimed in claim 1, comprising from 5 to 40% by weight, based on the weight of the preparation, of carbon black.

5. An aqueous dye preparation as claimed in claim 1, comprising from 0.1 to 6% by weight, based on the weight of the preparation, of polyethylene glycol or ethoxylated and/or propoxylated ethylenediamine.

6. The use of the aqueous dye preparation of claim 1 for production of inks for the inkjet process or of writing inks.

7. An ink comprising an aqueous dye preparation as claimed in claim 1, water or a mixture of water and a water-miscible organic solvent.

8. The use of the aqueous dye preparation of claim 1 for production of aqueous alcoholic coating or printing colors.

9. An aqueous alcoholic coating or printing color comprising an aqueous dye preparation as claimed in claim 1, water and at least one C₁-C₄-alkanol.

## Revendications

1. Préparations aqueuses de colorants, contenant, dans tous les cas par rapport au poids de la préparation, de 0,1 à 15 % en poids de colorants, 90 à 100 % en poids de la quantité des colorants étant constitués du colorant de formule I 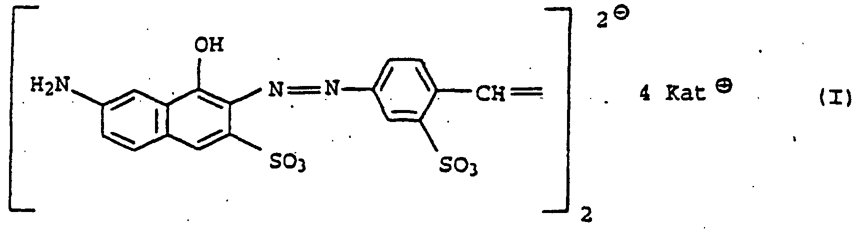 dans laquelle Kat^{⊕} est l'équivalent d'un ion métallique ou ammonium, de 1 à 40 % en poids de noir de carbone et de 0,1 à 15 % en poids de polyéthylèneglycol ou d'une éthylènediamine éthoxylée et/ou propoxylée.

2. Préparations aqueuses de colorants selon la revendication 1, contenant du polyéthylèneglycol ou une éthylènediamine éthoxylée et/ou propoxylée ayant une masse moléculaire moyenne de 300 à 9000.

3. Préparations aqueuses de colorants selon la revendication 1, contenant de 0,1 à 8 % en poids, dans tous les cas par rapport au poids de la préparation, d'un colorant.

4. Préparations aqueuses de colorants selon la revendication 1, contenant de 5 à 40 % en poids, dans tous les cas par rapport au poids de la préparation, de noir de carbone.

5. Préparations aqueuses de colorants selon la revendication 1, contenant de 0,1 à 6 % en poids, dans tous les cas par rapport au poids de la préparation, de polyéthylèneglycol ou d'une éthylènediamine éthoxylée et/ou propoxylée.

6. Utilisation des préparations aqueuses de colorants selon la revendication 1 pour préparer des encres destinées au procédé à jet d'encre ou des encres pour écriture.

7. Encres contenant une préparation aqueuse de colorant selon la revendication 1, de l'eau ou des mélanges d'eau et de solvants organiques miscibles à l'eau.

8. Utilisation des préparations aqueuses de colorants selon la revendication 1 pour préparer des peintures ou encres d'impression hydro-alcooliques.

9. Peintures ou encres d'impression hydro-alcooliques, contenant une préparation aqueuse de colorant selon la revendication 1, de l'eau et au moins un alcanol en C₁-C₄.
